**Europäisches Patentamt**

**European Patent Office**

**Office européen des brevets**

(19)

(11) Publication number : **0 323 877 B1**

## (12) EUROPEAN PATENT SPECIFICATION

(45) Date of publication of patent specification :
**14.10.92 Bulletin 92/42**

(21) Application number : **89200564.6**

(22) Date of filing : **22.08.85**

(51) Int. Cl.⁵ : **B60R 22/02**

(54) Seat belt device for a vehicle.

(30) Priority : **23.08.84 JP 175650/84**
**23.08.84 JP 175651/84**
**31.08.84 JP 182056/84**

(43) Date of publication of application :
**12.07.89 Bulletin 89/28**

(60) Publication number of the earlier application in
accordance with Art. 76 EPC : **0 175 493**

(45) Publication of the grant of the patent :
**14.10.92 Bulletin 92/42**

(84) Designated Contracting States :
**DE FR GB**

(56) References cited :
**DE-A- 2 730 081**
**FR-A- 2 384 656**
**FR-A- 2 387 661**
**JP-A-59 149 841**
**US-A- 3 841 659**

(73) Proprietor : **HONDA GIKEN KOGYO**
**KABUSHIKI KAISHA**
**1-go, 1-ban, Minami-Aoyama 2-chome**
**Minato-ku Tokyo 107 (JP)**

(72) Inventor : **Sasaki, Kiichi**
**31-8-106, Hon-cho**
**Wako-shi Saitama-ken (JP)**
Inventor : **Tabata, Hiroshi**
**770, Hiramatsu Hon-machi**
**Utsunomiya-shi Tochigi-ken (JP)**
Inventor : **Okuhara, Hisakazu**
**5-2-51, Hanawada**
**Utsunomiya-shi Tochigi-ken (JP)**
Inventor : **Higuchi, Kazuo**
**2-5-10, Hoshigaoka**
**Utsunomiya-shi Tochigi-ken (JP)**

(74) Representative : **Muir, Ian R. et al**
**HASELTINE LAKE & CO. Hazlitt House 28**
**Southampton Buildings Chancery Lane**
**London WC2A 1AT (GB)**

## Description

This invention relates to a three-point support seat belt device for a vehicle, particularly, for a vehicle in which a front seat and a rear seat are arranged within a compartment in a longitudinal direction of the vehicle, as specified in the preamble of claim 1. Such a device is known from JP-A-48-94120. However, when such a device is applied to the front seat, there arises a problem that when the length of the reach arm is set so that the seat belt may occupy a position where it is more easily worn when the reach arm is swung forwardly, inconveniences are encountered such that when the reach arm is swung to its non-used position or rearwardly, the reach arm interferes with the rear seat and/or disturbs a person in getting on and off the rear seat.

To this end, a seat belt device in accordance with the present invention is characterized by the features specified in the characterizing part of claim 1. In this device the free end of the seat belt is held at a position on the longitudinal extension of the reach arm when the reach arm is swung forwardly, and therefore, the seat belt can be worn easily. Moreover, when the reach arm is at the non-used position, the reach arm and the free end of the seat belt are folded relative to each other at the back of the front seat and housed compactly. The reach arm and the seat belt never interfere with the rear seat and do not disturb a person in getting on and off the rear seat. There is thus provided a seat belt device in which when the seat belt is not in use, the reach arm can be housed compactly; when the seat belt is to be used, the reach arm can project forwardly to let the seat belt occupy a position where the belt can be worn most easily; and when the seat belt is in use and a great shock is applied thereto, the device can effectively cope with such shock.

For a better understanding of the invention and to show how the same may be carried into effect, reference will now be made, by way of example, to the accompanying drawings, in which:

Figure 1 is a rear perspective view of a vehicle front seat provided with a three-point seat belt device;

Figure 2 is a side view showing front and rear seats and part of the seat belt device taken on line II-II in Figure 1;

Figure 3 is an enlarged view showing a part of Figure 2; and

Figure 4 is a sectional view taken on line IV-IV in Figure 3.

In the figures the front seat 4 and the rear seat 5 are shown longitudinally arranged on a floor surface 3 within a compartment 2 of a vehicle body 1. The front seat 4 can be slidably moved back and forth on a guide rail means 6 on the floor surface 3. The entry door of the vehicle is shown at 7.

As best shown in Figure 3, in the fore end of a straight reach arm that is a single member is bored a belt connecting hole 35 through which a free end Bt of the seat belt B is inserted and connected, which will be described later. This connecting hole 35 comprises, as shown in Figure 3, a U-shaped curve portion $35_1$ consisting of an arcuate portion a, and inner and outer straight line portions b and c parallel to each other which are connected to both ends of the arcuate portion a, and an inclined straight line portion $35_2$ obliquely connected to both ends of the curve portion $35_1$. An angle $\alpha$ formed between the outer straight line portion c and the inclined straight line portion $35_2$ is an acute angle. The aforesaid inclined straight line portion $35_2$ forms an engaging portion for the free end Bt of the seat belt B.

Rearwardly of the front seat, a retractor 21 is provided at the lower part of the wall 20 of the compartment. The seat belt B drawn from the retractor 21 extends upwardly along the wall 20 and is pulled out inwardly of the compartment 2 through a guide roller 22 and a guide ring 23 which are provided on the wall 20. The free end Bt of the seat belt B is attached to the seat belt connecting hole 35 at the fore end of the reach arm R. The free end Bt of the seat belt B is formed into a convergent trapezoidal shape and reinforced by means of a reinforcing element 30, the free end Bt being made of a firm cloth material or the like so that the free end is not deformed widthwise. When the reach arm R swings back and forth, the free end Bt of the seat belt B can freely be turned in the swinging direction of the reach arm R along the curve portion $35_1$ of the belt connecting hole 35 at the fore end of the reach arm R. When the reach arm R swings to the forward operative position, one side of the free end Bt of the seat belt B engages the inclined straight line portion $35_2$ of the belt connecting hole 35, that is, the engaging portion, so that the free end Bt of the seat belt B is retained on an extension lengthwise of the reach arm R. (See Figure 3).

Operation according to this embodiment will now be described.

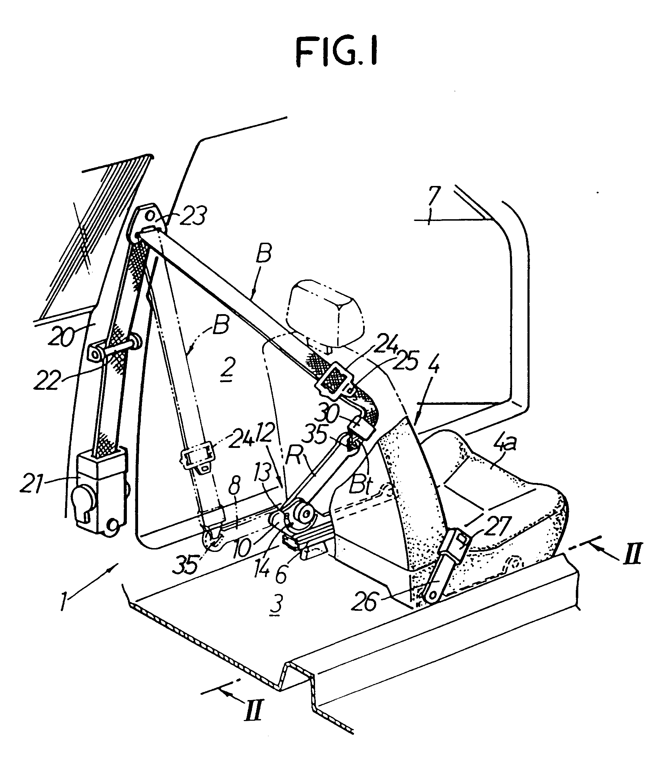

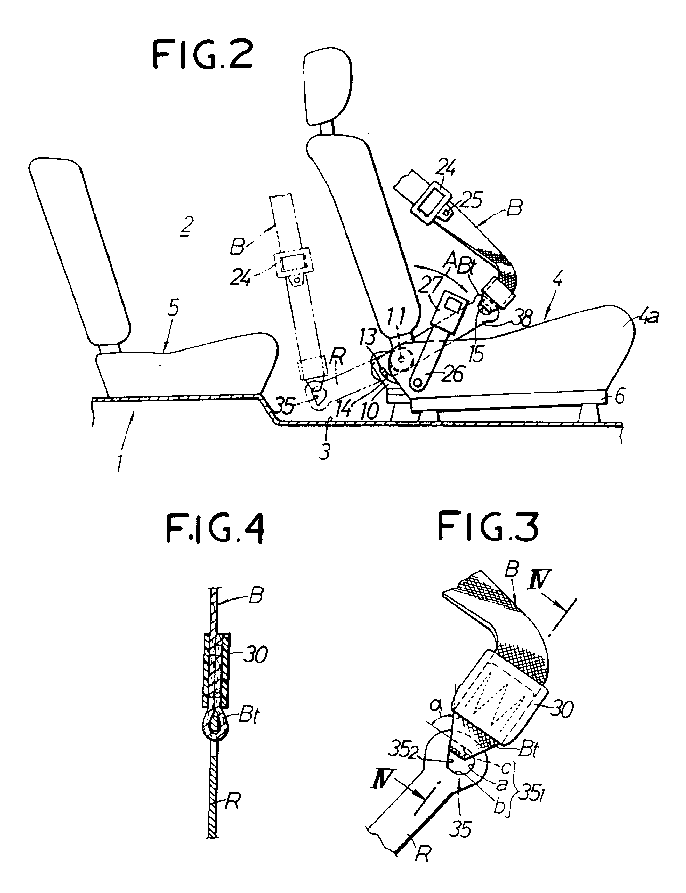

When the three-point seat belt device is not in use, the reach arm R stays housed rearwardly of the front seat 4. In this case, as shown by the chain line at 8 in Figures 1 and 2, the seat belt B is folded substantially at right angles to the longitudinal direction of the reach arm R, that is, the free end Bt thereof is in engagement with the arcuate portion a of the connecting hole 35. In this state, the seat belt B is compactly housed between the front and rear seats 4 and 5 without disturbing an occupant.

When the occupant seated on the front seat 4 actuates the driving device 12 to wear the seat belt B, the reach arm R is swung forwardly. In this case, as the reach arm R swings forwardly, the free end Bt of the seat belt B is freely turned within the belt connecting hole 35 from the arcuate portion a to the outer straight line portion c. Then, when the reach arm R is swung to the operative position forwardly of the front seat 4, tension is applied to the free end Bt of the seat belt B so that one widthwise side thereof engages a connection portion between the outer straight line portion c and the inclined straight line portion $35_2$, i.e., the engaging porting, as shown by the solid lines in Figs. 1 to 3, as a consequence of which the free end Bt is retained on a longitudinal extension of the reach arm R, whereby the seat belt B is guided to the place near the hand of the occupant seated on the front seat 4. Here, the occupant pulls the through-tang 24 inserted through the seat belt B while sliding the tang 24 along the seat belt B to engage the engaging hole 25 with the buckle 27. By the above-described operation, the seat belt B is worn by the occupant seated on the front seat 4.

When the occupant on the front seat 4 removes the through-tang 24 from the buckle 27 to stop using the seat belt device, the reach arm R is turned to the inoperative position at the rear of the front seat 4 by tension of the seat belt B and, at that time, the free end Bt of the seat belt B is turned in a direction opposite to that during the aforementioned belt wearing operation within the belt connecting hole 35 of the reach arm R, and the arm R is housed in a folded state as shown by the chain lines in Figs. 1 and 2 with the free end Bt being engaged by the arcuate portion a of the curve portion $35_1$.

## Claims

1. A seat belt device for a vehicle in which a front seat (4) and a rear seat (5) are arranged within a compartment in a longitudinal direction of the vehicle, the device comprising a reach arm (R) provided at one side of the front seat so as to be swingable back and forth, a seat belt (B) drawn out from a retractor (21) and attached to the reach arm, and a through-tang (24) mounted on the seat belt and capable of being detachably connected to a buckle (27) provided at the other side of the front seat, characterised in that said reach arm has at its fore end a belt connecting hole (35) to which a free end (Bt) of the seat belt is connected in a manner to allow the seat belt to relatively rotate in the swinging direction of the reach arm with respect to the reach arm, said belt connecting hole comprising a U-shaped curve portion ($35_1$) on which the free end of said seat belt is slidably moved during swing motion of said reach arm, and an inclined straight line portion ($35_2$) obliquely connected to both ends of said curve portion, said free end of the belt engaging the straight line portion in the operative position of said reach arm so as to be retained on a longitudinal extension of the reach arm.

2. A seat belt device as claimed in claim 1, wherein in said operative position of the reach arm (R), the free end (Bt) of said belt (B) is also engaged with an edge (c) of said belt connecting hole that is located on a longitudinally outer side of the reach arm, and wherein, in an inoperative position of said reach arm, the free end of said belt engages which one side edge (a) of said connecting hole.

## Patentansprüche

1. Sicherheitsgurt-Vorrichtung für ein Fahrzeug, in welchem ein Vordersitz (4) und ein Rücksitz (5) in einer Fahrgastzelle in einer Längsrichtung des Fahrzeugs angeordnet sind, die Vorrichtung umfassend einen Reicharm (R), der an einer Seite des Vordersitzes derart vorgesehen ist, daß er vor- und zurückschwenkbar ist, einen aus einer Rückhol-Vorrichtung (21) herausgezogenen und an dem Reicharm befestigten Sicherheitsgurt (B) und eine an dem Sicherheitsgurt angebrachte Durchführungsangel (24), die mit einer an der anderen Seite des Vordersitzes vorgesehenen Schnalle (27) lösbar verbindbar ist, **dadurch gekennzeichnet**, daß an dem vorderen Ende des Reicharms ein Gurtverbindungsloch (35) vorgesehen ist, mit welchem ein freies Ende (Bt) des Sicherheitsgurts derart verbunden ist, daß ein Relativverdrehen des Sicherheitsgurts bezüglich des Reicharms in der Schwenkrichtung des Reicharms möglich ist, wobei das Gurtbefestigungsloch einen U-förmigen Kurvenabschnitt ($35_1$) umfaßt, auf welchem das freie Ende des Sicherheitsgurts während einer Schwenkbewegung des Reicharms gleitverschieblich bewegt wird und einen geneigten geradlinigen Abschnitt ($35_2$), der mit beiden Enden des Kurvenabschnitts schräg verbunden ist, wobei das freie Ende des Gurts mit dem geradlinigen Abschnitt in der Betriebsstellung des Reicharms in Eingriff ist, um auf einer Verlängerung des Reicharms in dessen Längsrichtung zurückgehalten zu werden.

2. Sicherheitsgurt-Vorrichtung nach Anspruch 1, bei welcher in der Betriebsstellung des Reicharms (R) das freie Ende (Bt) des Sicherheitsgurts (B) auch mit einer Kante (c) des Gurtverbindungslochs in Eingriff steht, das an einer Längsaußenseite des Reicharm angeordnet ist, und bei welchem in einer Nicht-Betriebsstellung des Reicharms das freie Ende des Gurts mit einer Seitenkante (a) des Verbindungslochs in Eingriff ist.

**Revendications**

1. Dispositif de ceinture de sécurité pour un véhicule dans lequel un siège avant (4) et un siège arrière (5) sont disposés à l'intérieur d'un compartiment dans le sens longitudinal du véhicule, le dispositif comprenant un bras étirable (R) placé sur un côté du siège avant de manière à pouvoir basculer en arrière et en avant, une ceinture de sécurité (B) sortant d'un enrouleur (21) et fixée au bras étirable, et une boucle (24) montée sur la ceinture de sécurité et pouvant être fixée de façon détachable à un dispositif de bouclage (27) placé de l'autre côté du siège avant, caractérisé en ce que ledit bras étirable comporte à son extrémité avant un trou (35) d'attache de ceinture auquel une extrémité libre (Bt) de la ceinture de sécurité est reliée de manière à permettre à la ceinture de sécurité de tourner relativement dans le sens de pivotement du bras étirable par rapport au bras étirable, ledit trou d'attache de ceinture comprenant une partie courbée en U ($35_1$) sur laquelle l'extrémité libre de ladite ceinture de sécurité peut se déplacer en glissant pendant le mouvement de pivotement dudit bras étirable, et une partie en ligne droite inclinée ($35_2$) reliée obliquement aux deux extrémités de ladite partie courbée, ladite extrémité libre de la ceinture venant en contact avec la partie en ligne droite dans la position active dudit bras étirable de manière à être retenue sur une extension longitudinale du bras étirable.

2. Dispositif de ceinture de sécurité selon la revendication 1, dans lequel dans ladite position active du bras étirable (R), l'extrémité libre (Bt) de ladite ceinture (B) est également en contact avec un bord (c) dudit trou d'attache de ceinture qui est situé sur un côté longitudinalement extérieur du bras étirable, et dans lequel, dans une position inactive dudit bras étirable, l'extrémité libre de ladite ceinture vient en contact avec un bord latéral (a) dudit trou d'attache.

# FIG.1

# FIG.2

# F.IG.4

# FIG.3